# EUROPEAN PATENT SPECIFICATION

(11) **EP 3 290 314 B1**
(45) Date of publication and mention of the grant of the patent: **30.10.2019**
(21) Application number: 17184229.7
(22) Date of filing: 01.08.2017
(51) Int. Cl.: B62J 25/00

(54) **FOOTREST STRUCTURE FOR SADDLE-RIDE TYPE VEHICLE AND METHOD**
FUSSSTÜTZENSTRUKTUR FÜR EIN SATTELFAHRZEUG UND VERFAHREN
STRUCTURE DE REPOSE-PIEDS POUR VÉHICULE DE TYPE À SELLE ET PROCÉDÉ

(30) Priority: 05.09.2016 JP 2016173019
(43) Date of publication of application: 07.03.2018
(73) Proprietor: HONDA MOTOR CO., LTD., Tokyo 107-8556 (JP)
(72) Inventor: KOMATSU, Yoji, Saitama, 351-0193 (JP); TAKIZAWA, Takashi, Saitama, 351-0193 (JP); SATO, Ryo, Saitama, 351-0193 (JP)
(74) Representative: Weickmann & Weickmann PartmbB

(56) References cited:
- WO-A1-2014/154295
- JP-A- H10 203 456

## Description

### [Technical Field]

The present invention relates to a footrest structure for a saddle-ride type vehicle and a method for manufacturing a footboard for a saddle-ride type vehicle.

### [Background Art]

Heretofore, in footrest structures for saddle-ride type vehicles, there is known a footboard (floor mat) with a metal member and an elastic member laminated (refer to JP-A H2-200585, for example). WO 2014/154295 A1 discloses a footrest structure and method according to the preamble of claims 1 and 8. There, the bent portion is formed by an integral joint of an outer layer commonly covering both the first and second footrest portions.

### [Summary of Invention]

### [Technical Problem]

In footboards, the quality of appearance can be enhanced by configuring at least a part of a footboard with a metal member as is done in the aforementioned prior art. However, where a footboard is made to be an angled shape for the reasons of enhancing the quality of appearance, the convenience in design and the like, the dimension control of the metal member and the elastic member becomes difficult, and a facility such as a metal mold and the like for forming the footboard becomes large in scale. Therefore, the manufacturing of the footboard becomes difficult.

The present invention has been achieved in view of the above-mentioned circumstances, and it is an object of the present invention to enable a footboard being excellent in the quality of appearance to be manufactured easily.

### [Solution to Problem]

In order to achieve the object, the present invention provides a footrest structure and a method according to claims 1 and 8.

The footrest structure for a saddle-ride type vehicle includes a footboard (22) which is configured in series from a first footrest portion (31) to a second footrest portion (32) located behind the first footrest portion (31). A bent portion (33) is provided between the first footrest portion (31) and the second footrest portion (32). The first footrest portion (31) and the second footrest portion (32) are each configured with an elastic member (35) and a metal member (36). The bent portion (33) is configured with the elastic member (35) only.

According to the configuration of the present invention, the bent portion is provided between the first footrest portion and the second footrest portion of the footboard, the first footrest portion and the second footrest portion are each configured with the elastic member and the metal member, and the bent portion is configured with the elastic member only. Thus, the quality of appearance of the first footrest portion and the
second footrest portion can be enhanced by the use of the metal member. At the same time, the bent portion configured with the elastic member only is bent easily, and thus, an angle can be given between the first footrest portion and the second footrest portion. Therefore, it becomes possible to easily manufacture a footboard provided with the metal member, being an angled shape and enhanced in the quality of appearance.

Further, in the footrest structure of the present invention, the bent portion (33) may be configured to be formed at a back surface with a recess portion (51, 52, 151).

According to the configuration of the present invention, since the recess portion is formed at the back surface of the bent portion, the board thickness of the bent portion becomes thin at the area of the recess portion, and the bent portion can be bent easily.

Further, in the footrest structure of the present invention, a configuration may be taken that the recess portion (51, 52) is provided at two or more places in a front-rear direction.

According to the configuration of the present invention, since the recess portion is provided at two or more places in the front-rear direction, bent points at the bent portion are distributed in the front-rear direction, and thus, the bent portion can be bent easily.

Further, in the footrest structure of the present invention, a configuration may be taken that the footboard (22) is attached to a footboard support portion (23), that the footboard support portion (23) is provided with a corner portion (26) facing the bent portion (33), that a projection (53) is provided between the plural recess portions (51, 52), and that the projection (53) at least partially faces the corner portion (26) .

According to the configuration of the present invention, since the projection is provided between the plural recess portions and since the projection at least partially faces the corner portion of the footboard support portion, the bent portion can be supported by the corner portion through the projection, and hence, the bent portion can be prevented from floating from the footboard support portion.

Further, in the footrest structure of the present invention, a configuration may be taken that the footboard (22) is provided at a back surface with a plurality of attaching bosses (40, 41) and that at least the attaching bosses (40a, 41a) located in the vicinity of the bent portion (33) are located under the metal member (36).

According to the configuration of the present invention, since the plurality of attaching bosses are provided on the back surface of the footboard and since at least the attaching bosses located in the vicinity of the bent portion are located under the metal member, the load in attaching the attaching boss can be supported by the metal member, and the footboard can be attached easily through the attaching boss. Further, the floating of the attaching portion attributed to the attaching boss can be decreased by the metal member.

Furthermore, in the footrest structure of the present invention, the first footrest portion (31) and the second footrest portion (32) may be configured each for a rider.

According to the configuration of the present invention, since the first footrest portion and the second footrest portion are configured each for the rider and since the first footrest portion and the second footrest portion come close to each other in the front-rear position and in the height portion, the shape of the footboard can be simplified. Thus, it is easy to provide the footboard with the bent portion.

Further, in the footrest structure of the present invention, a configuration may be taken that provisions are made of an attaching portion (24) to which the second footrest portion (32) is attached, and a front-side attaching portion (25) tilting relative to the attaching portion (24) ahead of the attaching portion (24) and that the first footrest portion (31) is attached to the front-side attaching portion (25) .

According to the configuration of the present invention, the first footrest portion is attached to the front-side attaching portion tilting relative to the attaching portion for the second footrest portion. Thus, by attaching the second footrest portion to the attaching portion and attaching the first footrest portion to the front-side attaching portion, the bent portion can be bent and hence, the footboard can be bent easily.

Further, according to the present invention, in the method for manufacturing a footboard (22) for a saddle-ride type vehicle, the footboard (22) being configured in series from a first footrest portion (31) to a second footrest portion (32) located behind the first footrest portion (31), the method includes: providing a bent portion (33) between the first footrest portion (31) and the second footrest portion (32); configuring each of the first footrest portion (31) and the second footrest portion (32) with an elastic member (35) and a metal member (36); configuring the bent portion (33) with the elastic member (35) only; forming the elastic member (35) by integral molding; and forming the bent portion (33) by bending the elastic member (35) after forming the first footrest portion (31) and the second footrest portion (32) to be coplanar.

According to the configuration of the present invention, the bent portion is configured with the elastic member only, the elastic member is formed by integral molding, and, after the first footrest portion and the second footrest portion are formed to be coplanar, the bent portion is formed by bending the elastic member. Thus, because the footboard can be given an angle by bending the elastic member after the elastic member is formed by integral molding, a mold for integral molding can be made to be small in comparison with the case where the bent portion is formed at the time of performing the integral molding of the elastic member. Thus, it is possible to manufacture the footboard easily.

### [Advantageous Effects of Invention]

According to the present invention, it is possible to easily manufacture the footboard provided with the metal member, being the angled shape and being excellent in the quality of appearance.

Further, since the recess portion is provided at the bent portion, the bent portion can be bent easily.

Further, the bent portion can be supported by the corner portion through the projection, and the bent portion can be prevented from floating from the footboard support portion.

Further, the bent points at the bent portion can be distributed in the front-rear direction, and the bent portion can be bent easily.

Further, the attaching boss can be easily attached through the metal member, and the floating of the footboard can be decreased.

Furthermore, the shape of the footboard can be simplified, and it is easy to provide the footboard with the bent portion.

Further, by attaching the first footrest portion to the front-side attaching portion, it is possible to bend the bent portion and hence, to bend the footboard easily.

Further, the mold for integral molding can be made to be small in comparison with the case where the bent portion is formed at the time of forming the elastic member by integral molding. Thus, the footboard can be manufactured easily.

### [Brief Description of Drawings]

FIG. 1 is a left side view of a motorcycle according to an embodiment of the present invention.
FIG. 2 is a plan view of a footboard viewed from above.
FIG. 3 is a left side view of the footboard.
FIG. 4 is a plan view of a metal member viewed from above.
FIG. 5 is a V-V sectional view in FIG. 2.
FIG. 6 is an enlarged view of a surrounding area of a bent portion in FIG. 3.
FIG. 7 is an enlarged view showing a bent state of the bent portion.
FIG. 8 is an enlarged view of a surrounding area of a bent portion in a modified form of the embodiment.

### [Description of Embodiments]

Hereinafter, an embodiment of the present invention will be described with reference to the drawings. Incidentally, throughout the description, the description regarding the directions of front-rear, right-left and upper-lower will be in agreement with those relative to a body, unless otherwise stated. Further, a sign FR indicated in each figure represents a front side of the body, a sign UP represents an upper side of the body, and a sign LH represents a left side of the body.

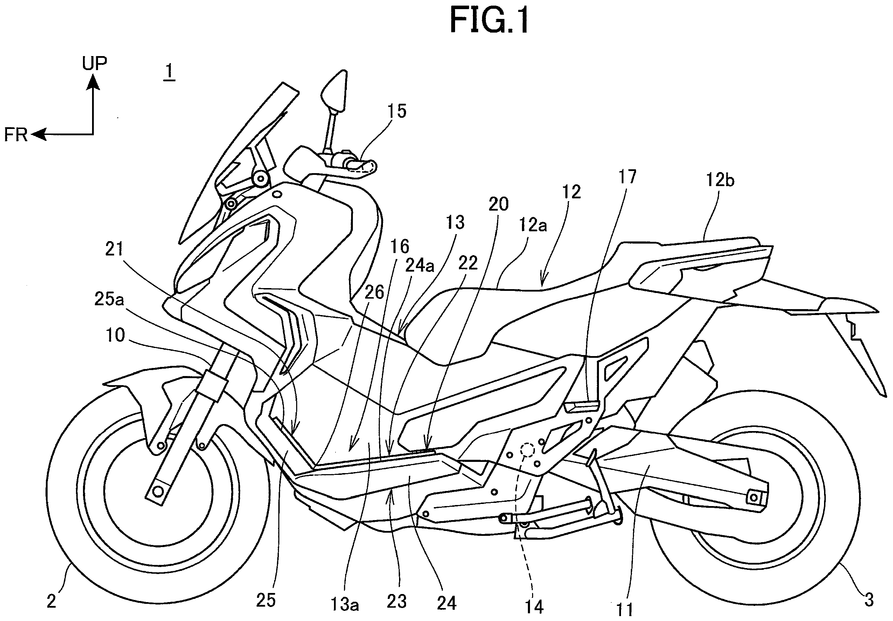

FIG. 1 is a left side view of a motorcycle according to an embodiment of the present invention. Incidentally, as noted hereafter, the left side view shows those on the left side only of those which are provided as right and left pairs.

A motorcycle 1 is a vehicle wherein an engine (not shown) as a power unit is supported on a body frame (not shown), wherein a front fork 10 steerably supporting a front wheel 2 is steerably supported at a front end of the body frame, and wherein a swing arm 11 supporting a rear wheel 3 is provided on a rear side of the body frame. The motorcycle 1 is a saddle-ride type vehicle wherein a seat 12 over which an occupant is seated to astride is provided at an upper surface portion of a body rear portion.

The motorcycle 1 is equipped with a body cover 13 covering the body such as the body frame.

The engine is placed to be lower than the seat 12 between the front wheel 2 and the swing arm 11 and is supported by the body frame. The engine is covered by the body cover 13 from at least the right and left sides and the upper side.

The seat 12 is equipped with a front seat 12a for a rider to be seated on and a rear seat 12b for a pillion passenger to be seated on. The front seat 12a is located on a front upper side of a pivot shaft 14 that pivotally supports the swing arm 11 on the body frame to make the swing arm 11 swingable.

The body cover 13 is equipped with a lateral cover portion 13a which on a lower side of the front seat 12, covers the body frame and the engine from lateral sides.

A steering handle 15 steered by the rider seated on the front seat 12a is provided at an upper end portion of the front fork 10 and is located on a front upper side of the front seat 12a.

Steps 16, 16 on which the rider seated on the front seat 12a rests right and left feet are provided as right and left pair on a front lower side of the front seat 12a.

The rider stretches his/her legs from the front seat 12a toward the front lower side along outer lateral surfaces of the lateral cover portion 13a and rests his/her feet on upper surfaces of the steps 16, 16.

Tandem steps 17, 17 on which the pillion passenger seated on the rear seat 12b rests his/her right and left feet are provided as right and left pair on a rear upper side of the pivot shaft 14.

Hereunder, description will be made regarding a footrest structure for the rider.

The right and left steps 16, 16 are each formed like a floor protruding from a lower portion of the lateral cover portion 13a outward in the vehicle width direction and extending continuously in the front-rear direction. Since the right and left steps 16, 16 are configured to be almost right and left symmetrical, description here will be made in detail of the left step 16 on the left side, while the detailed description of the step 16 on the right side will be omitted.

The step 16 is equipped with a footrest portion 20 extending almost horizontally in the front-rear direction as seen in the side view and a front-side footrest portion 21 extending forward and tilting in an attitude of being upward to the front from a front end of the footrest portion 20. In detail, the footrest portion 20 extends in the front-rear direction to slightly tilt downward to the front. The rider can place his/her foot on the footrest portion 20 and can also place his/her foot on the front-side footrest portion 21 with his/her leg stretched forward further.

The footrest portion 20 overlaps at a rear portion with the front seat 12a in the front-rear direction. The front-side footrest portion 21 is located ahead of the steering handle 15.

The step 16 is configured to be equipped with a footboard 22 on which the foot of the rider is placed, and a footboard support portion 23 supporting the footboard 22 from under the footboard 22.

The footboard support portion 23 is equipped with an attaching portion 24 constituting a support portion for the footboard 22 in the footrest portion 20 and a front-side attaching portion 25 constituting a support portion for the footboard 22 in the front-side footrest portion 21.

An upper surface 24a of the attaching portion 24 is formed like an almost flat floor extending in the front-rear direction as seen in the side view. An upper surface 25a of the front-side attaching portion 25 extends forward from a front end of the upper surface 24a of the attaching portion 24 in an attitude of tilting upward to the front as seen in the side view. The upper surface 25a is formed like a floor being almost flat as seen in the side view.

The footboard support portion 23 is equipped with a corner portion 26 connecting the front end of the upper surface 24a with a rear end of the upper surface 25a.

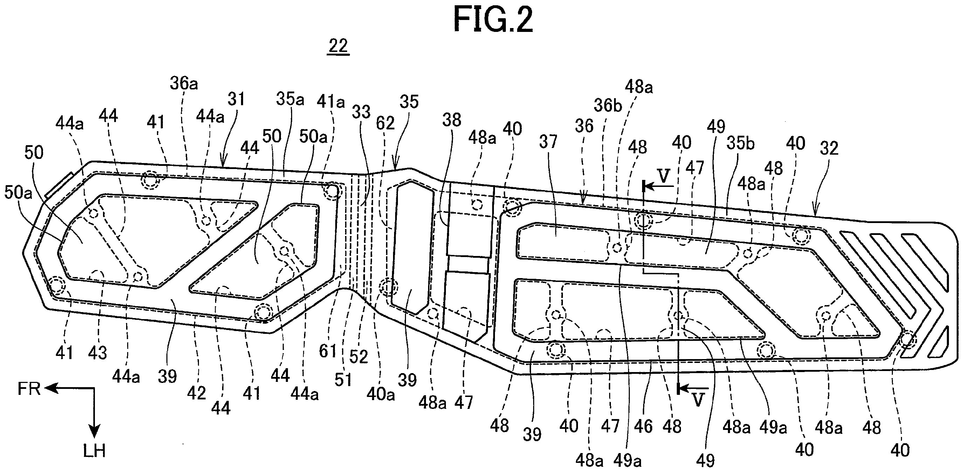

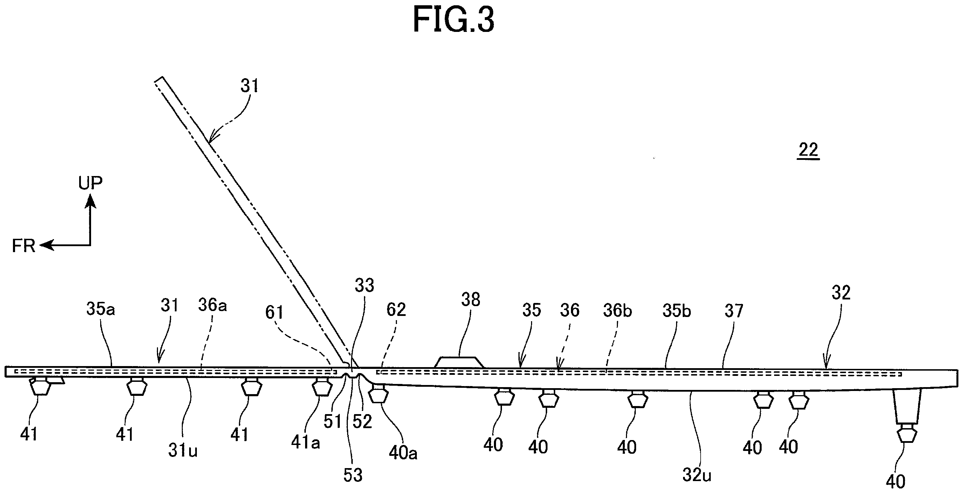

FIG. 2 is a plan view of the footboard 22 viewed from above. FIG. 3 is a left side view of the footboard 22.

Referring to FIG. 1 to FIG. 3, the footboard 22 is formed like a plate extending longer in the front-rear direction than in the vehicle width direction (right-left direction).

The footboard 22 is equipped with a first footrest portion 31 for the rider to place his/her foot on, a second footrest portion 32 located behind the first footrest portion 31, and a bent portion 33 provided between the first footrest portion 31 and the second footrest portion 32. The first footrest portion 31, the bent portion 33 and the second footrest portion 32 are formed in series in the front-rear direction.

The first footrest portion 31 is attached to the upper surface 25a of the front-side attaching portion 25 of the footboard support portion 23. The second footrest portion 32 is attached to the upper surface 24a of the attaching portion 24 of the footboard support portion 23.

The footboard 22 is formed like a plate being almost flat in its manufacturing stage, and when attached to the footboard support portion 23, the footboard 22 is bent at the bent portion 33 to become a shape in which the first footrest portion 31 tilts upwardly toward the front.

The footboard 22 takes a configuration that a plate-like metal member 36 is integrally embedded in an elastic member 35 constituted by rubber. The metal member 36 is a stainless steel, for example, and may be not only an iron-base material but also a light metal such as an aluminum alloy or the like.

The elastic member 35 is integrally equipped with a first elastic member 35a constituting a body portion of the first footrest portion 31, a second elastic member 35b constituting a body portion of the second footrest portion 32, and the bent portion 33. The bent portion 33 is constituted by the elastic member 35 only and is made of rubber as a whole. That is, the first elastic member 35a and the second elastic member 35b are connected by the bent portion 33.

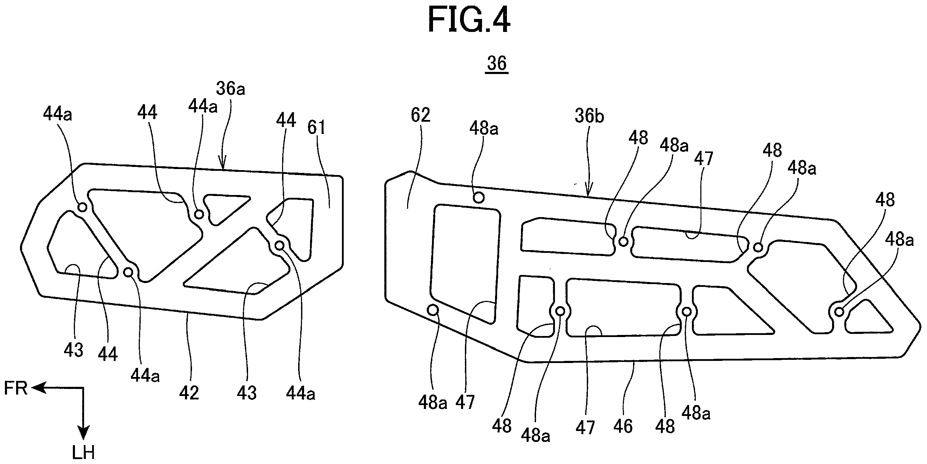

FIG. 4 is a plan view of the metal member 36 viewed from above.

Referring to FIG. 2 to FIG. 4, the metal member 36 is equipped with a first metal member 36a embedded in the first elastic member 35a and a second metal member 36b embedded in the second elastic member 35b.

The footboard 22 is manufactured by integrally forming the elastic member 35 and the metal member 36 by the use of a mold. In detail, the footboard 22 is manufactured by filling up with a liquefied elastic member 35 the mold in which the first metal member 36a and the second metal member 36b are set, and then by solidifying the elastic member 35. In this way, the metal member 36 is embedded in the elastic member 35.

In the state before the footboard 22 is attached to the footboard support portion 23, upper surfaces of the first elastic member 35a, the bent portion 33 and the second elastic member 35b which become a footrest surface 37 for the rider to place his/her foot on are formed to be almost flat and extend straight.

The first elastic member 35a (first footrest portion 31) and the bent portion 33 are formed to be thinner in board thickness than the second elastic member 35b (second footrest portion 32). Because the footrest surface 37 is formed to be continuous and almost flat, the lower surfaces (back surfaces) of the first elastic member 35a and the bent portion 33 are depressed toward the footrest surface 37 side relative to the lower surface (back surface) of the second elastic member 35b.

The second elastic member 35b is formed to be longer in the front-rear direction than the first elastic member 35a. Further, the bent portion 33 is formed to be shorter in the front-rear direction than the first elastic member 35a.

The second elastic member 35b is formed to be wider in the vehicle width direction than the first elastic member 35a. Further, the bent portion 33 is formed to be narrower in the vehicle width direction than the first elastic member 35a.

The second elastic member 35b is formed at a front portion on the upper surface with a block-like stopper portion 38 protruding upward. The rider with the foot placed on the footrest surface 37 makes the foot caught on the stopper portion 38 and is able to prevent the foot from sliding back and forth.

Further, the footrest surface 37 is formed with a plurality of released portions 39 that are exposed upward at parts of upper surfaces of the first metal member 36a and the second metal member 36b embedded in the elastic member 35. The released portions 39 are openings provided at parts of the footrest surface 37.

The lower surface of the second elastic member 35b is formed with a plurality of shaft-like attaching bosses 40 protruding downward. The second footrest portion 32 is fitted at the respective attaching bosses 40 in fitting portions (not shown) provided on the attaching portion 24 (FIG. 1) of the footboard support portion 23, and thus, the second footrest portion 32 is secured on the footboard support portion 23.

The lower surface of the first elastic member 35a is formed with a plurality of shaft-like attaching bosses 41 protruding downward. The first footrest portion 31 is fitted at the respective attaching bosses 41 in fitting portions (not shown) provided on the front-side attaching portion 25 (FIG. 1) of the footboard support portion 23, and thus, the first footrest portion 31 is secured on the footboard support portion 23.

The first metal member 36a takes a plate-like shape which is longer in the front-rear direction than in the vehicle width direction. The first metal member 36a, as seen in a plan view, is formed to be smaller in external shape than the first elastic member 35a, and a peripheral edge portion 42 is covered with the first elastic member 35a throughout the whole periphery.

The first metal member 36a is embedded in a mid portion in the board thickness direction of the first elastic member 35a.

The first metal member 36a is provided with a plurality of lightening holes 43 piercing through the first metal member 36a in the board thickness direction (vertical direction). Further, the first metal member 36a is provided with a plurality of bridge portions 44 extending across within inner peripheral portions of the lightening holes 43 in the vehicle width direction.

The bridge portions 44 are formed with a plurality of positioning holes 44a piercing through the bridge portions 44 in the board thickness direction.

The second metal member 36b takes a plate-like shape which is longer in the front-rear direction than in the vehicle width direction. The second metal member 36b, as seen in a plan view, is formed to be smaller in external shape than the second elastic member 35b, and a peripheral edge portion 46 is covered with the second elastic member 35b throughout the whole periphery.

The second metal member 36b is embedded in the second elastic member 35b at an upper portion in the board thickness direction. The second metal member 36b and the first metal member 36a are almost the same in board thickness and, in the state in FIG. 3, are at almost the same position in the vertical direction.

The second metal member 36b is provided with a plurality of lightening holes 47 piercing through the second metal member 36b in the board thickness direction (vertical direction). Further, the second metal member 36b is provided with a plurality of bridge portions 48 extending across within inner peripheral portions of the lightening holes 47 in the vehicle width direction.

The bridge portions 48 and the front portion of the second metal member 36b are formed with a plurality of positioning holes 48a piercing through the second metal member 36b in the board thickness direction.

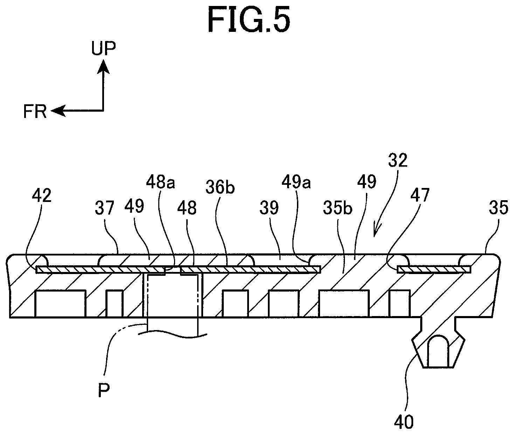

FIG. 5 is a V-V sectional view in FIG. 2.

The second metal member 36b is positioned within a mold with positioning pins P (FIG. 5) of the mold inserted into the respective positioning holes 48a from below. In this state, the mold is filled with the elastic member 35 being liquefied, and thus, the second metal member 36b is embedded inside the second elastic member 35b.

The elastic member 35 is provided with go-around portions 49 which go through the lightening holes 47 from below toward above to be situated on the upper surface side of the second metal member 36b. The go-around portions 49 are provided with hold portions 49a which are placed over peripheral edge portions of the lightening holes 47 from above. The upper surfaces of the go-around portions 49 constitute the footrest surface 37. Further, the hold portions 49a constitute parts of peripheral edge portions of the released portions 39.

In the present embodiment, the lightening holes 47 make it possible to constitute the second metal member 36b being light in weight. Further, because the hold portions 49a of the go-around portions 49 provided at the lightening holes 47 hold the second metal member 36b, the second metal member 36b can be firmly embedded in the second elastic member 35b.

Further, parts of the go-around portions 49 cover the bridge portions 48 and the positioning holes 48a from above. Thus, the positioning holes 48a can be hidden, and the quality of appearance can be improved.

Further, parts of the upper surface of the second metal member 36b are exposed to the upper side at the released portions 39 of the second elastic member 35b. Thus, since the second metal member 36b can be seen from outside, the quality of appearance can be improved.

Further, as shown in FIG. 2, the first metal member 36a is positioned in the mold with the positioning pins P (FIG. 5) of the mold inserted into the respective positioning holes 44a from below. In this state, the elastic member 35 being liquefied is filled in the mold, and the first metal member 36a is embedded inside the first elastic member 35a.

The elastic member 35 is provided with go-around portions 50 which go through the lightening holes 43 from below toward above to be situated on the upper surface side of the first metal member 36a. The go-around portions 50 are provided with hold portions 50a placed over the peripheral edge portions of the lightening holes 43 from above. The upper surfaces of the go-around portions 50 constitute the footrest surface 37. Further, the hold portions 50a constitute parts of peripheral edge portions of the released portions 39.

Parts of the go-around portions 50 cover the bridge portions 44 and the positioning holes 44a from above. Parts of the upper surface of the first metal member 36a are exposed to the upper side at the released portions 39 of the first elastic member 35a. Thus, since the first metal member 36a can be seen from outside, the quality of appearance can be improved.

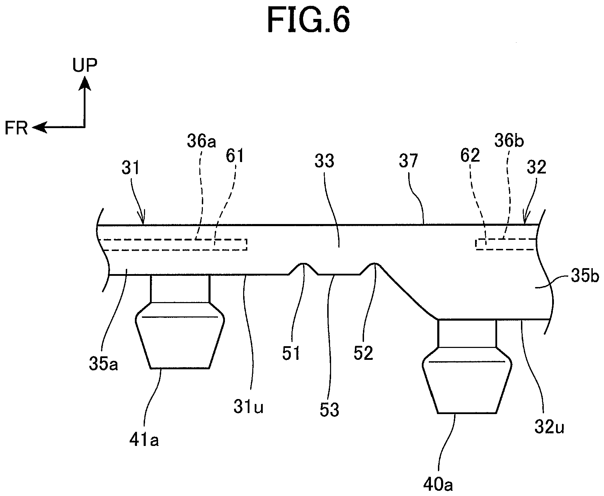

FIG. 6 is an enlarged view of a surrounding area of the bent portion 33 in FIG. 3.

As shown in FIG. 2, FIG. 3 and FIG. 6, the bent portion 33 is provided with a plurality of recess portions 51, 52 which are depressed upward on the lower surface of the bent portion 33. The recess portions 51, 52, as seen in the side view, are each formed to depress the lower surface of the bent portion 33 to a circular arc shape. Further, the recess portions 51, 52 are each formed like a groove-shape extending in the vehicle width direction.

Further, between the recess portion 51 and the recess portion 52 on the lower surface of the bent portion 33, a projection 53 is formed protruding downward beyond bottom portions of depressions of the recess portions 51, 52. A lower surface of the projection 53 is flush with a lower surface 31u of the first footrest portion 31.

The recess portions 51, 52 are juxtaposed in the front-rear direction between a rear end portion 61 of the first metal member 36a and a front end portion 62 of the second metal member 36b at the bent portion 33 and reside at positions that do not overlap with the first metal member 36a and the second metal member 36b in the front-rear direction.

The recess portions 51, 52 are provided on a surface in a downward direction of the bent portion 33 which direction is opposite to an upward direction being the bent direction of the bent portion 33 in the state of the footboard 22 attached to the footboard support portion 23.

Hereafter, description will be made regarding one example of a manufacturing procedure for the step 16.

First of all, the footboard support portion 23 (FIG. 1) on the body side is assembled. In the state that the footboard 22 has been manufactured by integral manufacturing by the use of the mold, the first elastic member 35a and the second elastic member 35b are formed nearly straight to be coplanar as shown in FIG. 3.

Subsequently, the second footrest portion 32 is secured to the attaching portion 24 (FIG. 1) at the attaching bosses 40, and the first footrest portion 31 is secured to the front-side attaching portion 25 (FIG. 1) at the attaching bosses 41. Thus, the footboard 22 is deformed along the upper surfaces 24a, 25a (FIG. 1) of the footboard support portion 23 as indicated by the virtual line in FIG. 3, and the bent portion 33 is bent at the position of the corner portion 26 to bring the first footrest portion 31 into the state of tilting upward to the front.

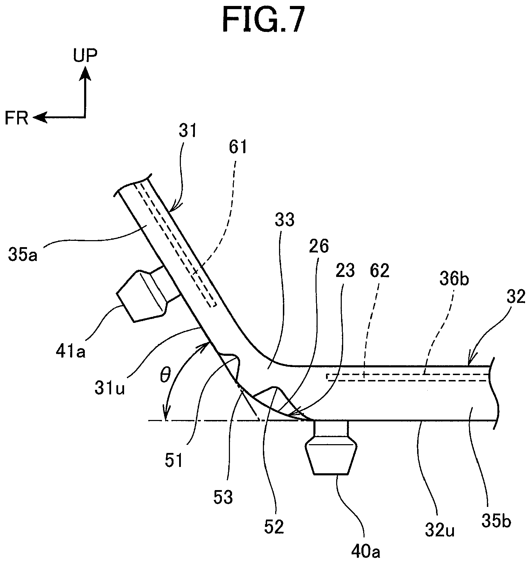

FIG. 7 is an enlarged view showing the bent state of the bent portion 33.

The corner portion 26 of the footboard support portion 23 is formed by being smoothly curved at an intersection point of an extension line of the lower surface 31u of the first footrest portion 31 with an extension line of a lower surface 32u of the second footrest portion 32 in the state that the bent portion 33 is bent to a set angle in a finished state.

In the state that the footboard 22 is attached to the footboard support portion 23, the projection 53 of the bent portion 33 faces the corner portion 26 at its part and is supported by the corner portion 26. In the present embodiment, since the bent angle θ of the bent portion 33 is an acute angle, the recess portion 51 is positioned at a front portion of the corner portion 26, while the recess portion 52 is positioned at a rear portion of the corner portion 26. Herein, the bent angle θ of the bent portion 33 takes as the reference (0 degree) the state before the bent portion 33 is bent (the solid line state in FIG. 3), and the bent angle θ means a variation in the angle of the first footrest portion 31 between the reference state and the state of being bent as shown in FIG. 7.

In the present embodiment, the footboard 22 in the state of having been manufactured by the use of the mold is a plate-like shape being straight, and thus, the mold can be made to be small in height in comparison with the case where the bent portion 33 is formed in a mold at the time of a mold forming. Thus, the cost involved in the mold and the operability can be improved, so that the manufacturing of the footboard 22 is easy.

Further, since the bent portion 33 is configured by the elastic member 35 only and the metal member 36 is not provided at the bent portion 33, it is possible to bend the bent portion 33 easily.

Further, since the recess portions 51, 52 are provided on the lower surface of the bent portion 33 and the thickness of the bent portion 33 becomes thin partly at the recess portions 51, 52, it is possible to bend the bent portion 33 easily. Thus, since the curvature of the bent portion 33 can be made to be large and the bent portion 33 is made to follow along the corner portion 26 of the footboard support portion 23, the footboard 22 can be prevented from floating from the footboard support portion 23 in the vicinity of the bent portion 33.

Further, since the curvature of the bent portion 33 can be secured to be large by the plurality of recess portions 51, 52 dispersing the load against the bending and since the bent portion 33 is received on the corner portion 26 at the projection 53 provided between the recess portions 51, 52 and facing the corner portion 26, it can be effectively prevented that the bent portion 33 floats from the corner portion 26.

Further, since the bent portion 33 is a narrow-width portion which is narrower than the first footrest portion 31 and the second footrest portion 32 in the vehicle width direction, it is possible to bend the bent portion 33 easily.

Furthermore, since the recess portions 51, 52 are provided at the bent portion 33 being thinner in board thickness than the second footrest portion 32, it is possible to bend the bent portion 33 easily.

Further, as shown in FIG. 2, FIG. 3 and FIG. 6, the attaching bosses 41 are arranged at positions overlapping with the first metal member 36a as seen in a plan view and are located under the first metal member 36a. Likewise, the attaching bosses 40 are arranged at positions overlapping with the second metal member 36b as seen in a plan view and are located under the second metal member 36b. Thus, in attaching the footboard 22 to the footboard support portion 23, it is possible to pressure the attaching bosses 40, 41 through the second metal member 36b and the first metal member 36a being high in rigidity, and thus, it is possible to easily attach the footboard 22 to the footboard support portion 23.

Furthermore, of the plurality of attaching bosses 41, an attaching boss 41a residing to be closest to the bent portion 33 overlaps with a rear end portion 61 of the first metal member 36a as seen in a plan view and is located under the rear end portion 61. Further, of the plurality of attaching bosses 40, an attaching boss 40a residing to be closest to the bent portion 33 overlaps with the front end portion 62 of the second metal member 36b as seen in a plan view and is located under the front end portion 62. Thus, because the surrounding areas of the attaching bosses 40a, 41a can be enhanced in rigidity by the second metal member 36b and the first metal member 36a, it is possible to attach the attaching bosses 40a, 41a rigidly, and hence, the bent portion 33 can be prevented from floating from the corner portion 26.

Further, the peripheral edge portion 42 of the first metal member 36a and the peripheral edge portion 46 of the second metal member 36b are covered with the elastic member 35 and are not exposed outside. Thus, a step for chamfering the edges of the peripheral edge portion 42 and the peripheral edge portion 46 can be excluded, and hence, the footboard 22 can be manufactured easily.

As described hereinabove, according to the embodiment to which the present invention is applied, the footrest structure for the motorcycle 1 includes the footboard 22 which is configured in series from the first footrest portion 31 to the second footrest portion 32 located behind the first footrest portion 31, the bent portion 33 is provided between the first footrest portion 31 and the second footrest portion 32, the first footrest portion 31 and the second footrest portion 32 are each configured with the elastic member 35 and the metal member 36, and the bent portion 33 is configured with the elastic member 35 only. Thus, the first footrest portion 31 and the second footrest portion 32 can be improved by the metal member 36 in the quality of appearance. In addition, by easily bending the bent portion 33 configured with the elastic member 35 only, it is possible to give an angle between the first footrest portion 31 and the second footrest portion 32. Therefore, it is possible to easily manufacture the footboard 22 provided with the metal member 36, being an angled shape and improved in the quality of appearance.

Further, since the recess portions 51, 52 are formed on the back surface of the bent portion 33, the board thickness of the bent portion 33 becomes partly thin at the recess portions 51, 52, and it is possible to bend the bent portion 33 easily. Further, the load imposed on the bent portion 33 can be reduced.

Further, since the recess portions 51, 52 are provided at two or more places in the front-rear direction, the bent points at the bent portion 33 can be dispersed in the front-rear direction, and thus, it is possible to bend the bent portion 33 easily.

Further, the footboard 22 is attached to the footboard support portion 23, the footboard support portion 23 is provided with the corner portion 26 facing the bent portion 33, the projection 53 is provided between the plurality of recess portions 51, 52, and the projection 53 at least partially faces the corner portion 26. Therefore, the bent portion 33 can be supported by the corner portion 26 through the projection 53, and hence, the bent portion 33 can be prevented from floating from the footboard support portion 23.

Further, the plurality of attaching bosses 40, 41 are provided on the back surface of the footboard 22, and the attaching bosses 40a, 40b residing in the vicinity of the bent portion 33 are located under the metal member 36. Thus, the load imposed in attaching the attaching bosses 40a, 40b can be received by the metal member 36, and thus, it is possible to easily attach the footboard 22 through the attaching bosses 40a, 40b. Further, the floating of the footboard 22 caused by the attaching bosses 40a, 40b at the attaching portion can be decreased by the metal member 36. Incidentally, in the foregoing embodiment, the plurality of attaching bosses 40, 41 are located under the metal member 36. However, without being limited to this, at least the attaching bosses 40a, 40b in the vicinity of the bent portion 33 may be enough to be located under the metal member 36.

Furthermore, since the first footrest portion 31 and the second footrest portion 32 are each for the rider, and the front-rear positions and height positions of the first footrest portion 31 and the second footrest portion 32 become close to each other, the shape of the footboard 22 can be made to be simple. Thus, it is easy to provide the footboard 22 with the bent portion 33.

Further, the footrest structure is equipped with the attaching portion 24 to which the second footrest portion 32 is attached, and the front-side attaching portion 25 which tilts relative to the attaching portion 24 ahead of the attaching portion 24, and the first footrest portion 31 is attached to the front-side attaching portion 25. Thus, it is possible to bend the bent portion 33 by attaching the second footrest portion 32 to the attaching portion 24 and by attaching the first footrest portion 31 to the front-side attaching portion 25, and hence, the footboard 22 can be bent easily.

Further, the bent portion 33 is constituted by the elastic member 35 only, and the elastic member 35 is formed by integral molding. The bent portion 33 is formed by bending the elastic member 35 after the first footrest portion 31 and the second footrest portion 32 are formed to be coplanar. Thus, because it is possible to give the footboard 22 the angle by bending the elastic member 35 after the integral molding of the elastic member 35, the mold for integral molding can be made to be small in comparison with the case where the bent portion 33 is formed at the time of performing the integral molding of the elastic member 35. Therefore, it is possible to manufacture the footboard 22 easily.

### [Modified Form]

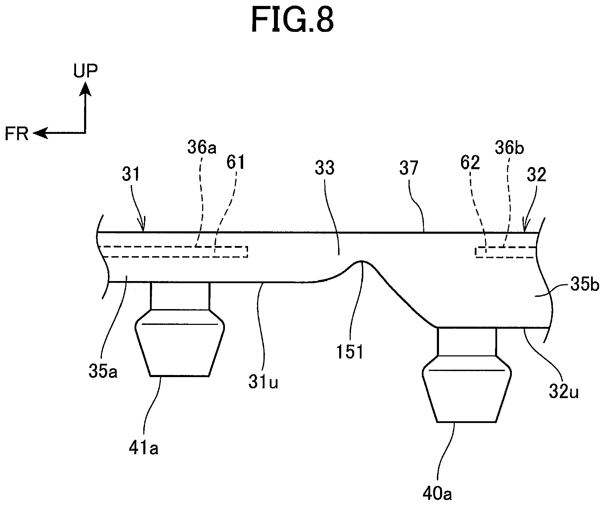

FIG. 8 is an enlarged view of a surrounding area of the bent portion 33 in a modified form of the embodiment.

In this modified form, portions configured to be the same as those in the foregoing embodiment will be omitted from the description with the same signs given.

As shown in FIG. 8, the bent portion 33 is provided with only one recess portion 151 which is depressed upward on a lower surface (back surface) of the bent portion 33. Since the recess portion 151 causes the bent portion 33 to become thin in board thickness, it is possible to bend the bent portion 33 easily.

Incidentally, the foregoing embodiment and the modified form each shows one form to which the present invention is applied, and thus, the present invention is not limited to the foregoing embodiment and the modified form.

In the foregoing embodiment, the elastic member 35 has been described as being constituted by rubber. However, this does not limit the present invention, and the elastic member 35 may be constituted by a resin material.

Further, in the foregoing embodiment and the modified form, the footboard 22 has been described as being manufactured by integrally molding the elastic member 35 and the metal member 36 by the used of the mold. However, without being limited to this, there may be taken a configuration that, for example, after the integral molding of the elastic member 35, the metal member 36 is inserted into the elastic member 35.

### [Problem]

To enable a footboard being excellent in the quality of appearance to be manufactured easily.

### [Solution]

In a footrest structure for a saddle-ride type vehicle, including a footboard 22 which is configured in series from a first footrest portion 31 to a second footrest portion 32 located behind the first footrest portion 31, a bent portion 33 is provided between the first footrest portion 31 and the second footrest portion 32, the first footrest portion 31 and the second footrest portion 32 are each configured with an elastic member 35 and a metal member 36, and the bent portion 33 is configured with the elastic member 35 only.

### [Reference Sings List]

1...Motorcycle (saddle-ride type vehicle)
22...Footboard
23...Footboard support portion
24...Attaching portion
25...Front-side attaching portion
26...Corner portion
31...First footrest portion
32...Second footrest portion
33...Bent portion
35...Elastic member
36...Metal member
40, 41...Attaching boss
40a, 41a...Attaching boss (attaching boss located in the vicinity of the bent portion)
51, 52...Recess portion
53...Projection

## Claims

1. A footrest structure for a saddle-ride type vehicle, comprising
a footboard (22) which is configured in series from a first footrest portion (31) to a second footrest portion (32) located behind the first footrest portion (31),
wherein a bent portion (33) is provided between the first footrest portion (31) and the second footrest portion (32),
**characterized in that** the first footrest portion (31) and the second footrest portion (32) are each configured with an elastic member (35) and a metal member (36), and
the bent portion (33) is configured with the elastic member (35) only, wherein the metal member (36) is equipped with
a first metal member (36a) embedded in the first elastic member (35) and
a second metal member (36b) embedded in the second elastic member (35) at a position spaced rearward form the first metal member (36a), and
the bent portion (33) is a portion provided between the first metal member (36a) and the second metal member (36b) in the elastic member (35).

2. The footrest structure for the saddle-ride type vehicle according to Claim 1, wherein the bent portion (33) is formed at a back surface with a recess portion (51, 52, 151).

3. The footrest structure for the saddle-ride type vehicle according to Claim 2, wherein the recess portion (51, 52) is provided at two or more places in a front-rear direction.

4. The footrest structure for the saddle-ride type vehicle according to Claim 3,
wherein the footboard (22) is attached to a footboard support portion (23),
the footboard support portion (23) is provided with a corner portion (26) facing the bent portion (33),
a projection (53) is provided between the plural recess portions (51, 52), and
the projection (53) at least partially faces the corner portion (26).

5. The footrest structure for the saddle-ride type vehicle according to any of Claims 1 through 4,
wherein the footboard (22) is provided at a back surface with a plurality of attaching bosses (40, 41), and
at least the attaching boss (40a, 41a) located in the vicinity of the bent portion (33) is located under the metal member (36).

6. The footrest structure for the saddle-ride type vehicle according to any of Claims 1 through 5, wherein the first footrest portion (31) and the second footrest portion (32) are each for a rider.

7. The footrest structure for the saddle-ride type vehicle according to any of Claims 1 through 6, further comprising:
an attaching portion (24) to which the second footrest portion (32) is attached; and
a front-side attaching portion (25) tilting relative to the attaching portion (24) ahead of the attaching portion (24),
wherein the first footrest portion (31) is attached to the front-side attaching portion (25).

8. A method for manufacturing a footboard (22) for a saddle-ride type vehicle, the footboard (22) being configured in series from a first footrest portion (31) to a second footrest portion (32) located behind the first footrest portion (31), the method comprising:
providing a bent portion (33) between the first footrest portion (31) and the second footrest portion (32);
**characterized by** configuring each of the first footrest portion (31) and the second footrest portion (32) with an elastic member (35) and a metal member (36) embedded in the elastic member (35) by integral molding;
configuring the bent portion (33) with the elastic member (35) only and providing the bent portion (33) between the first metal member (36a) of the first footrest portion (31) and the second metal member (36b) of the second footrest portion (32);
forming the elastic member (35) by integral molding; and
forming the bent portion (33) by bending the elastic member (35) after forming the first footrest portion (31) and the second footrest portion (32) to be coplanar.

## Patentansprüche

1. Fussstützenstruktur für ein Aufsitzsattel-Fahrzeug, welche aufweist:
eine Fussplatte (22), die in Serie von einem ersten Fussstützenabschnitt (31) zu einem hinter dem ersten Fussstützenabschnitt (31) angeordneten zweiten Fussstützenabschnitt (32) konfiguriert ist,
wobei ein gebogener Abschnitt (33) zwischen dem ersten Fussstützenabschnitt (31) und dem zweiten Fussstützenabschnitt (32) vorgesehen ist;
**dadurch gekennzeichnet, dass** der erste Fussstützenabschnitt (31) und der zweite Fussstützenabschnitt (32) jeweils mit einem elastischen Element (35) und einem Metallelement (36) konfiguriert sind, und
der gebogene Abschnitt (33) nur mit dem elastischen Element (35) konfiguriert ist, wobei das Metallelement (36) mit einem in das erste elastische Element (35) eingebetteten ersten Metallelement (36a) und
einem in das zweite elastische Element (35) an einer Position mit Abstand hinter dem ersten Metallelement (36a) eingebetteten zweiten Metallelement (36b) ausgestattet ist, und
der gebogene Abschnitt (33) ein Abschnitt ist, der zwischen dem ersten Metallelement (36a) und dem zweiten Metallelement (36b) in dem elastischen Element (35) vorgesehen ist.

2. Die Fussstützenstruktur für das Aufsitzsattel-Fahrzeug nach Anspruch 1, wobei der gebogene Abschnitt (33) an einer Rückseite mit einem Vertiefungsabschnitt (51, 52, 151) ausgebildet ist.

3. Die Fussstützenstruktur für das Aufsitzsattel-Fahrzeug nach Anspruch 2, wobei der Vertiefungsabschnitt (51, 52) in Vorne-Hinten-Richtung an zwei oder mehr Stellen vorgesehen ist.

4. Die Fussstützenstruktur für das Aufsitzsattel-Fahrzeug nach Anspruch 3, wobei die Fussplatte (22) an einem Fussplattenlagerabschnitt (23) angebracht ist,
der Fussplattenlagerabschnitt (23) mit einem zu dem gebogenen Abschnitt (33) weisenden Eckabschnitt (26) versehen ist,
ein Vorsprung (53) zwischen den mehreren Vertiefungsabschnitten (51, 52) vorgesehen ist, und
der Vorsprung (53) zumindest teilweise zu dem Eckabschnitt (26) weist.

5. Die Fussstützenstruktur für das Aufsitzsattel-Fahrzeug nach einem der Ansprüche 1 bis 4,
wobei die Fussplatte (22) an einer Rückseite mit einer Mehrzahl von Befestigungsnaben (40, 41) versehen ist, und
zumindest die in der Nähe des gebogenen Abschnitts (33) angeordnete Befestigungsnabe (40a, 41a) unter dem Metallelement (36) angeordnet ist.

6. Die Fussstützenstruktur für das Aufsitzsattel-Fahrzeug nach einem der Ansprüche 1 bis 5,
wobei der erste Fussstützenabschnitt (31) und der zweite Fussstützenabschnitt (32) jeweils für einen Fahrer sind.

7. Die Fussstützenstruktur für das Aufsitzsattel-Fahrzeug nach einem der Ansprüche 1 bis 6, die ferner aufweist:
einen Befestigungsabschnitt (24), an dem der zweite Fussstützenabschnitt (32) angebracht ist; und
einen vorderen Befestigungsabschnitt (25), der vor dem Befestigungsabschnitt (24) relativ zu dem Befestigungsabschnitt (24) geneigt ist,
wobei der erste Fussstützenabschnitt (31) an dem vorderen Befestigungsabschnitt (25) angebracht ist.

8. Verfahren zur Herstellung einer Fussplatte (22) für ein Aufsitzsattel-Fahrzeug, wobei die Fussplatte (22) in Serie von einem ersten Fussstützenabschnitt (31) zu einem hinter dem ersten Fussstützenabschnitt (31) angeordneten zweiten Fussstützenabschnitt (32) konfiguriert ist, wobei das Verfahren aufweist:
Bereitstellen eines gebogenen Abschnitts (33) zwischen dem ersten Fussstützenabschnitt (31) und dem zweiten Fussstützenabschnitt (32);
**gekennzeichnet durch**
Konfigurieren jedes des ersten Fussstützenabschnitts (31) und des zweiten Fussstützenabschnitts (32) mit einem elastischen Element (35) und einem in das elastische Element (35) eingebetteten Metallelement (36) durch integriertes Formen;
Konfigurieren des gebogenen Abschnitts (33) nur mit dem elastischen Element (35), und Bereitstellen des gebogenen Abschnitts (33) zwischen dem ersten Metallelement (36a) des ersten Fussstützenabschnitts (31) und dem zweiten Metallelement (36b) des zweiten Fussstützenabschnitts (32); Ausbilden des elastischen Elements (35) durch integriertes Formen; und
Ausbilden des gebogenen Abschnitts (33) durch Biegen des elastischen Elements (35) nach dem koplanaren Ausbilden des ersten Fussstützenabschnitts (31) und des zweiten Fussstützenabschnitts (32).

## Revendications

1. Structure de repose-pieds pour un véhicule de type à selle, comprenant un plancher (22) qui est configuré en série d'une première partie de repose-pieds (31) à une seconde partie de repose-pieds (32) située derrière la première partie de repose-pieds (31),
dans laquelle une partie pliée (33) est fournie entre la première partie de repose-pieds (31) et la seconde partie de repose-pieds (32),
**caractérisée en ce que** la première partie de repose-pieds (31) et la seconde partie de repose-pieds (32) sont chacune configurées avec un élément élastique (35) et un élément métallique (36), et
la partie pliée (33) est configurée avec l'élément élastique (35) uniquement, dans laquelle l'élément métallique (36) est équipé de
un premier élément métallique (36a) incorporé dans le premier élément élastique (35) et
un second élément métallique (36b) incorporé dans le second élément élastique (35) au niveau d'une position espacée vers l'arrière du premier élément métallique (36a),
et
la partie pliée (33) est une partie fournie entre le premier élément métallique (36a) et le second élément métallique (36b) dans l'élément élastique (35).

2. Structure de repose-pieds pour le véhicule de type à selle selon la revendication 1, dans laquelle la partie pliée (33) est formée au niveau d'une surface arrière avec une partie évidée (51, 52, 151).

3. Structure de repose-pieds pour le véhicule de type à selle selon la revendication 2, dans laquelle la partie évidée (51, 52) est fournie au niveau de deux endroits ou plus dans une direction avant-arrière.

4. Structure de repose-pieds pour le véhicule de type à selle selon la revendication 3, dans laquelle le plancher (22) est fixé à une partie de support de plancher (23),
la partie de support de plancher (23) est dotée d'une partie d'angle (26) faisant face à la partie pliée (33),
une saillie (53) est fournie entre les plusieurs parties évidées (51, 52), et
la saillie (53) fait au moins partiellement face à la partie d'angle (26).

5. Structure de repose-pieds pour le véhicule de type à selle selon l'une quelconque des revendications 1 à 4,
dans laquelle le plancher (22) est doté au niveau d'une surface arrière d'une pluralité de bossages de fixation (40, 41), et
au moins le bossage de fixation (40a, 41a) situé à proximité de la partie pliée (33) est situé sous l'élément métallique (36).

6. Structure de repose-pieds pour le véhicule de type à selle selon l'une quelconque des revendications 1 à 5, dans laquelle la première partie de repose-pieds (31) et la seconde partie de repose-pieds (32) sont chacune pour un motocycliste.

7. Structure de repose-pieds pour le véhicule de type à selle selon l'une quelconque des revendications 1 à 6, comprenant en outre :
une partie de fixation (24) à laquelle la seconde partie de repose-pieds (32) est fixée ; et
une partie de fixation côté avant (25) s'inclinant par rapport à la partie de fixation (24) devant la partie de fixation (24),
dans laquelle la première partie de repose-pieds (31) est fixée à la partie de fixation côté avant (25).

8. Procédé de fabrication d'un plancher (22) pour un véhicule de type à selle, le plancher (22) étant configuré en série d'une première partie de repose-pieds (31) à une seconde partie de repose-pieds (32) située derrière la première partie de repose-pieds (31), le procédé comprenant :
la fourniture d'une partie pliée (33) entre la première partie de repose-pieds (31) et la seconde partie de repose-pieds (32) ;
**caractérisé par** la configuration de chacune de la première partie de repose-pieds (31) et de la seconde partie de repose-pieds (32) avec un élément élastique (35) et un élément métallique (36) incorporé dans l'élément élastique (35) par moulage intégral ;
la configuration de la partie pliée (33) avec l'élément élastique (35) uniquement et la fourniture de la partie pliée (33) entre le premier élément métallique (36a) de la première partie de repose-pieds (31) et le second élément métallique (36b) de la seconde partie de repose-pieds (32) ;
la formation de l'élément élastique (35) par moulage intégral ; et
la formation de la partie pliée (33) par pliage de l'élément élastique (35) après la formation de la première partie de repose-pieds (31) et de la seconde partie de repose-pieds (32) pour qu'elles soient coplanaires.
